# EUROPEAN PATENT SPECIFICATION

(11) **EP 4 057 059 B1**
(45) Date of publication and mention of the grant of the patent: **02.08.2023**
(21) Application number: 22158694.4
(22) Date of filing: 25.02.2022
(51) Int. Cl.: G03B 11/04, F25D 23/12

(54) **A COOLING APPLIANCE HAVING MEANS TO PROVIDE USER PRIVACY**
KÜHLGERÄT MIT MITTELN ZUR BEREITSTELLUNG VON BENUTZERPRIVATSPHÄRE
APPAREIL DE REFROIDISSEMENT DOTÉ DE MOYEN POUR ASSURER LA CONFIDENTIALITÉ DE L'UTILISATEUR

(30) Priority: 10.03.2021 TR 202104545
(43) Date of publication of application: 14.09.2022
(73) Proprietor: Arçelik Anonim Sirketi, 34445 Istanbul (TR)
(72) Inventor: ERDAL, Gizem, 34445 ISTANBUL (TR); CELIK, Ridvan Kadir, 34445 ISTANBUL (TR); INCUKUR, Ali Ihsan, 34445 ISTANBUL (TR); SIMSEK, Turan Erdem, 34445 ISTANBUL (TR); SEN, Fethi, 34445 ISTANBUL (TR)

(56) References cited:
- CN-U- 205 647 718
- US-A1- 2017 329 206
- US-A1- 2020 404 137

## Description

The present invention relates to a cooling appliance, in particular to a cooling appliance having means to provide user privacy.

The users may have trouble remembering the contents of their cooling appliance while shopping. As a result of this, many user may buy goods which they already have or simply forget the products they actually need to buy. Most of the modern cooling devices are provided with cameras allowing the user to visualize the inner volume of the cooling appliance by means of graphical user interfaces (GUI). Examples of GUIs can be a smart phone, computer, tablets or display screens provided on the cooling appliance. The user may connect to the camera while shopping by means of one of the GUIs, preferably by means of a smart phone, to see the products stored inside the cooling appliance. Each time, the door of the cooling appliance is opened and closed, the aforementioned camera takes a shot of the inner volume and the user utilizes the shot to decide on what to buy and what not to buy. A concern raised by the users indicate that they are reluctant to use such cameras for privacy reasons. Said cameras may take a shot of the interior of the household if the door is opened with a wide angle. Use of firewalls and security protocols increase the privacy of the users, however some users prefer a manual method that blocks the view of the camera.

A prior art publication in the technical field of the present invention may be referred to as DE102013216759A1 among others, the document disclosing a cooling appliance having a camera.

A prior art publication in the technical field of the present invention may be referred to as CN208316848 among others, the document disclosing a cooling appliance having a camera wherein the sight of the camera can be blocked by means of a pair of lids.

The document CN 205 647 718 U discloses a refrigerator comprising a camera device.

The document US 2017/329206 A1 discloses a camera obstructing device comprising a frame and an obstructing member slidably placed in the frame, wherein the in one of its two positions the obstructing member prevents light from reaching a light sensor of the camera.

The document US 2020/404137 A1 discloses a refrigerator comprising a camera and a control method thereof.

It is an aim of the present invention to provide privacy for the users of cooling appliances having an integrated camera therein.

The method realized to achieve the aim of the present invention and disclosed in the first claim and the dependent claims comprises a cooling appliance. The cooling appliance comprises a body and a door pivotable attached to the body between a closed orientation an open orientation. During the close orientation of the door, the door and the body delimits an inner volume wherein the articles to be cooled are placed. The cooling appliance comprises an inner liner facing the inner volume and surrounding the inner volume in the closed orientation of the door. The cooling appliance further comprises a handle provided on the door. A camera module is provided inside the inner volume of the cooling appliance and is attached onto the inner liner. The inner liner is provided both on an inner surface of the body and the door. The camera module comprises a camera housing accommodating the a camera via which the visual image of the inner volume of the cooling appliance is captured. The camera module further comprises a camera holder onto which the camera is immovable fixed. The camera holder comprises an opening which is adjacent to the lens of the camera and which allows the camera to visualize the inner volume of the cooling appliance. Furthermore, a frame is provided on the camera holder. The frame provides a slider to be placed onto itself. The slider is configured to slide on the frame between a first orientation and a second orientation. During the first orientation, the position of the slider coincides with the opening and closes the opening thereby blocking the view of the camera. During the second orientation, the slider is moved away from the opening such that the camera can capture the visual images of the inner volume of the cooling appliance. An advantageous effect provided by means of the slider is that the users are ensured that the camera, once the slider is moved towards the first orientation, cannot take images of the interior of the household or the user himself. By means of the slider, a cost effective solution is provided for the users of the cooling appliance in terms of privacy.

In an embodiment of the invention, the frame comprises at least an indent provided on the frame. Preferably, two pairs of indents are provided opposite to each other on the frame. The first pair of indents allows the slider to be fixed in the first orientation whereas the second pair of indents allows the slider to be fixed in the second orientation. Thereby accidental move of the slider is prevented.

According to the invention, the camera housing comprises an electrical agitation means that is used to move the slider between the first orientation and the second orientation. The electrical agitation means facilitates the movement of the slider.

In an embodiment of the invention, the cooling appliance comprises an activation means that is provided on an outer surface of the cooling appliance. The activation means can be provided on the body, the door or the handle. The activation means is configured to activate the electrical activation means to slide the slider between the first and the second orientation. In case wherein the user needs to block the view of the camera by sliding the slider towards the first orientation, the user may simply activate the activation means which in turn will activate the electrical agitation means thus moving the slider towards the first orientation. The activation means can be a button. By means of this, the user may easily activate the electrical agitation means before opening the door, thus ensuring that the visuals of interior of the household and that of the user will not be taken.

In an embodiment of the invention, the electrical agitation means can be activated by means of a graphical user interface (GUI). The GUIs can be a smart phone, computer, tablets or display screens provided on the cooling appliance.

According to the invention, the cooling appliance is provided with a sensor wherein the sensor is configured to detect the angle between the door and the body during open orientation. The sensor is in communication with the electrical agitation means and is configured to slide the slider towards the first orientation when and if the angle exceeds a predetermined angle. By means of this, the view of the camera is automatically blocked when the angle between the door and the body exceeds a predetermined angle.

In an embodiment of the invention, the electrical agitation means is an electric motor.

In another embodiment of the invention, the frame is configured to be electrically induced which in turn magnetizes the frame. The magnetized frame attracts or repels the slider which is also produced from a suitable material.

By means of the present invention, the privacy of the user is ensured.

The drawings are not meant to delimit the scope of protection as identified in the claims nor should they be referred to alone in an effort to interpret the scope identified in the claims without recourse to the technical disclosure in the description of the present invention.

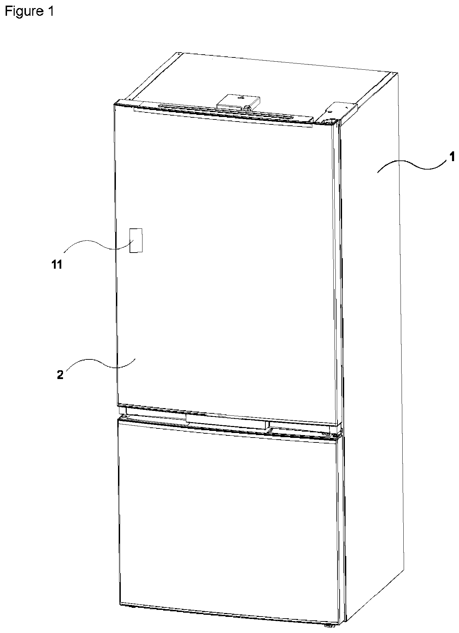

Figure 1 - is a perspective view of the cooling applaince

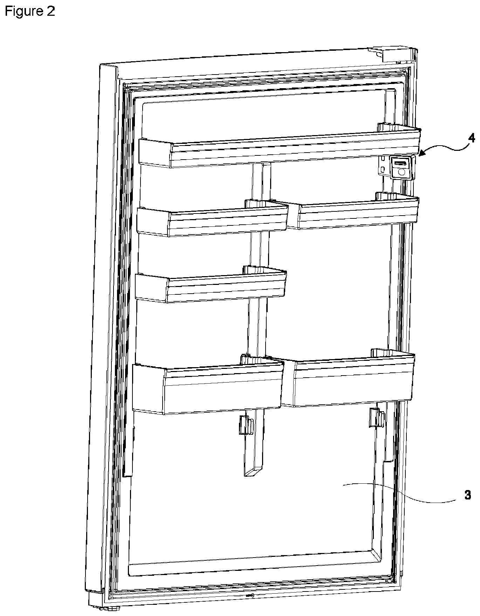

Figure 2 - is a perspective view of the door

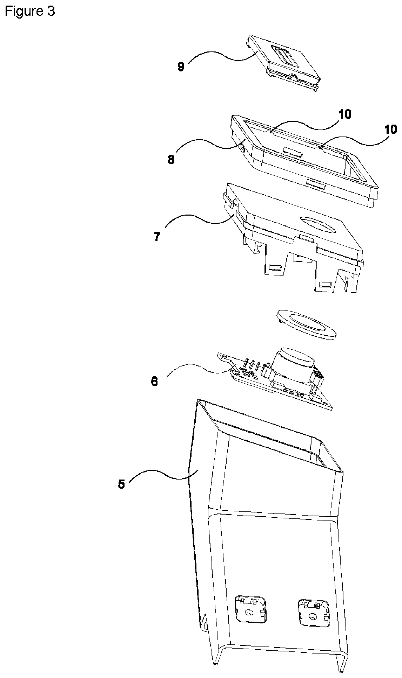

Figure 3 - is an exploded view of the camera module

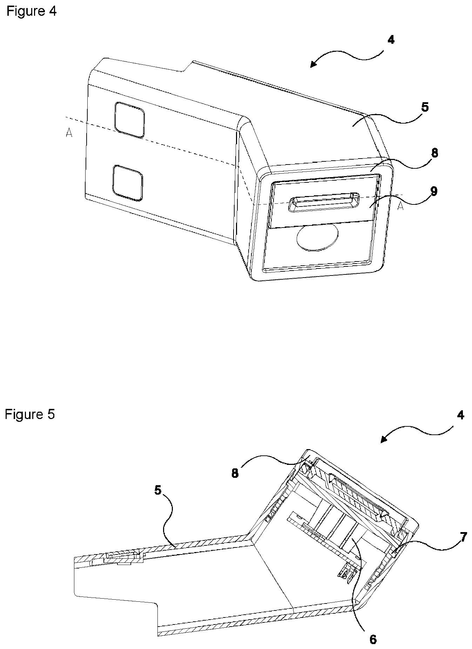

Figure 4 - is a perspective view of the camera module
Figure 5 - is a cross sectional view of the camera module along dashed A-A lines in Figure 4

The following numerals are assigned to different parts demonstrated in the drawings and referred to in the present detailed description of the invention:
1. Body
2. Door
3. Inner liner
4. Camera module
5. Camera housing
6. Camera
7. Camera holder
8. Frame
9. Slider
10. Indent
11. Activation means

The present invention relates to a cooling appliance comprising; a body (1), a door (2) pivotable attached onto the body (1) between a closed and an open orientation, wherein the door (2) and the body (1) delimits an inner volume in the closed orientation of the door (2), a handle provided on the door (2), an inner liner (3) facing the inner volume, a camera module (4) attached onto the inner liner (3), the camera module (4) comprising; a camera housing (5) for accommodating a camera (6), a camera holder (7) at a front surface of the camera module (4) onto which the camera (6) is placed and via which the camera (6) is enclosed inside the camera housing (5) and wherein the camera holder (7) has an opening through which the inner volume of the cooling appliance is visible by means of the camera (6).

The present invention further comprises a frame (8) provided on the camera holder (7), a slider (9) slidably placed into the frame (8) between a first orientation during which the slider (9) blocks the view of the camera (6) by closing the opening and a second orientation during which the camera (6) is configured to see the inner volume of the cooling appliance. The body (1) and the door (2) delimits an inner volume wherein the articles to be cooled are placed. The inner volume is surrounded by an inner liner forming an inner surface of the door (2) and the body (1). The camera module (4) is placed onto the inner liner (3) meaning that the camera module (4) can be placed onto the inner liner (3) of the body (1) or onto the inner liner provided on the door (2). In a preferred embodiment the camera module (4) is placed adjacent or underneath a door shelf provided on the door (2). The camera module (4) comprises the camera housing (5) accommodating the operational parts of the camera (6). At the front surface of the camera module (4), the camera holder (7) is provided. The camera holder (7) provides a surface onto which the camera (6) is placed. The camera holder (7) comprises the opening through which the camera (6) establishes visual contact with the inner volume of the cooling appliance. The frame (8) is provided on the camera holder (7) and accommodates the slider (9). The slider (9) is configured to slide between a first orientation and a second orientation. During the first orientation, the slider (9) encloses the opening thereby obstructing the view of the inner volume of the cooling appliance. During the second orientation, the slider (9) moves away from the opening, allowing the camera (6) to view and photograph the inner volume of the cooling appliance. By means of the slider (9), the users are ensured that the camera (6) is not allowed to take pictures or videos of the users and the interior of the household. As a result of this, the users are ensured that their privacy are guaranteed. The slider (9) is a solution to the privacy issues raised

In the preferred embodiment of the invention, the frame (8) comprises at least an indent (10) immobilizing the slider (9) in the first or the second orientation. The amount of indent (10) can be two or more. The indent (10) is positioned such that the slider (9) can rest in the first orientation or in the second orientation. By means of the indents (10), the slider (9) can be easily positioned on the frame (8).

According to the invention, the camera housing (5) comprises an electrical agitation means (not shown) configured to slide the slider (9) between the first and the second orientation upon activation. The electrical agitation means provides the slider (9) to move between the first orientation and the second orientation. The electrical agitation means can be configured to slide the slider (9) without opening the door (2). Therefore, the users are ensured of their privacy.

In the preferred embodiment of the invention, an activation means (11) is provided on an outer surface of the body (1), door (2) or the handle, which upon being activated is configured to activate the electrical agitation means to slide the slider (9) between the first and the second orientation. The activation means (11) is provided on an outer surface of the cooling appliance. The activation means (11) can be button or the like as long as it can activate electrical agitation means to slide the slider (9) between the first orientation and the second orientation.

In the preferred embodiment of the invention, the electrical agitation means is configured to be activated by means of a graphical user interface (GUI). The GUI can be a smart phone, a computer, a tablet or a display provided on the door (2) of the cooling appliance.

According to the invention, a sensor system (not shown) is configured to detect the opening angle between the door (2) and the body (1) in the open orientation and configured to activate the electrical agitation means to slide the slider (9) towards the first orientation at a predetermined angle. The sensor system, upon opening of the door (2), starts to measure the angle between the door (2) and the body (1) and sends a signal to the electrical agitation means when and if the angle exceeds a predetermined angle. The electrical agitation means then activates the slider (9) to slide towards the first orientation. As a result of this, the camera (6) is prevented to visualize the interior of household and the user. On the other hand, the sensor system measures the angle as the door (2) is closed and sends a signal to the electrical agitation means when and if the angle falls below a predetermined angle. As a result of this, the inner volume of the cooling appliance is visualized, meanwhile automatically ensuring user privacy.

In the preferred embodiment of the invention, the electrical agitation means is an electric motor.

An advantageous effect provided by means of the invention is that the users are ensured that the camera (6) could not take any visual of the interior of the household.

## Claims

1. A cooling appliance comprising:
a body (1),
a door (2) pivotable attached onto the body (1) between a closed and an open orientation, wherein the door (2) and the body (1) delimits an inner volume in the closed orientation of the door (2),
a handle provided on the door (2),
an inner liner (3) facing the inner volume,
a camera module (4) attached onto the inner liner (3), the camera module (4) comprising:
a camera housing (5) for accommodating a camera (6),
a camera holder (7) at a front surface of the camera module (4) onto which the camera (6) is placed and via which the camera (6) is enclosed inside the camera housing (5) and wherein the camera holder (7) has an opening through which the inner volume of the cooling appliance is visible by means of the camera (6),
**characterized by**
a frame (8) provided on the camera holder (7),
a slider (9) slidably placed into the frame (8) between a first orientation during which the slider (9) blocks the view of the camera (6) by closing the opening and a second orientation during which the camera (6) is configured to see the inner volume of the cooling appliance,
the camera housing (5) comprising an electrical agitation means configured to slide the slider (9) between the first and the second orientation upon activation, and
a sensor system configured to, upon opening of the door, measure the opening angle between the door (2) and the body (1) in the open orientation and configured to activate the electrical agitation means to slide the slider (9) towards the first orientation only when the measured angle exceeds a predetermined angle.

2. A cooling appliance according to claim 1, **characterized in that** the frame (8) comprises at least an indent (10) immobilizing the slider (9) in the first or the second orientation.

3. A cooling appliance according to claim 1 or 2, **characterized by** an activation means (11) provided on an outer surface of the body (1), door (2) or the handle, which upon being activated is configured to activate the electrical agitation means to slide the slider (9) between the first and the second orientation.

4. A cooling appliance according to any preceding claim, **characterized in that** the electrical agitation means is configured to be activated by means of a graphical user interface.

5. A cooling appliance according to any preceding claim, **characterized in that** the electrical agitation means is an electric motor.

## Patentansprüche

1. Ein Kühlgerät umfasst:
einen Körper (1),
eine Tür (2), die zwischen einer geschlossenen und einer offenen Ausrichtung schwenkbar am Körper (1) angebracht ist, wobei die Tür (2) und der Körper (1) in der geschlossenen Ausrichtung der Tür (2) ein Innenvolumen begrenzen,
einen an der Tür (2) vorgesehenen Griff,
eine dem Innenvolumen zugewandte Innenauskleidung (3),
ein Kameramodul (4), das an der Innenauskleidung (3) befestigt ist, wobei das Kameramodul (4) folgendes umfasst:
ein Kameragehäuse (5) zur Aufnahme einer Kamera (6),
einen Kamerahalter (7) an einer Vorderfläche des Kameramoduls (4), auf dem die Kamera (6) platziert ist und über den die Kamera (6) im Kameragehäuse (5) eingeschlossen ist, und wobei die Kamerahalterung (7) eine Öffnung aufweist, durch die das Innenvolumen des Kühlgeräts mittels der Kamera (6) sichtbar ist,
**gekennzeichnet ist es dadurch, dass**
durch einen am Kamerahalter (7) vorgesehenen Rahmen (8),
einen Schieber (9), der zwischen einer ersten Ausrichtung, in der der Schieber (9) die Sicht auf die Kamera (6) blockiert, indem er die Öffnung schließt, und eine zweite Ausrichtung, bei der die Kamera (6) dazu konfiguriert ist, das Innenvolumen des Kühlgeräts zu sehen,
das Kameragehäuse (5) umfasst ein elektrisches Bewegungsmittel, das so konfiguriert ist, dass es den Schieber (9) bei Aktivierung zwischen der ersten und der zweiten Ausrichtung verschiebt, dass es beim Öffnen der Tür den Öffnungswinkel zwischen der Tür (2) und dem Körper (1) in der offenen Ausrichtung misst und so konfiguriert ist, um die elektrischen Bewegungsmittel zu aktivieren, um den Schieber (9) nur dann in die erste Ausrichtung zu verschieben, wenn der gemessene Winkel einen vorbestimmten Winkel überschreitet.

2. Ein Kühlgerät, wie in Anspruch 1 aufgeführt, **ist dadurch gekennzeichnet, dass** der Rahmen (8) mindestens eine Vertiefung (10) aufweist, die den Schieber (9) in der ersten oder der zweiten Ausrichtung fixiert.

3. Ein Kühlgerät, wie in Anspruch 1 oder 2 aufgeführt, **ist dadurch gekennzeichnet, dass** ein Aktivierungsmittel (11) an einer Außenfläche des Korpus (1), der Tür (2) oder des Griffs vorgesehen ist, das bei seiner Aktivierung so konfiguriert ist, dass es die elektrischen Rührmittel aktiviert, um den Schieber (9) zwischen der ersten und der zweiten Ausrichtung zu verschieben.

4. Ein Kühlgerät, wie in einem der vorherigen Ansprüchen aufgeführt, **ist dadurch gekennzeichnet, dass** das elektrische Rührmittel so konfiguriert ist, dass es über eine grafische Benutzeroberfläche aktiviert werden kann.

5. Ein Kühlgerät, wie in einem der vorherigen Ansprüchen aufgeführt, **ist dadurch gekennzeichnet, dass** das elektrische Rührmittel ein Elektromotor ist.

## Revendications

1. Un appareil de refroidissement comprenant:
un corps (1),
une porte (2) pouvant pivoter sur le corps (1) entre une orientation fermée et une orientation ouverte, dans laquelle la porte (2) et le corps (1) délimitent un volume intérieur dans l'orientation fermée de la porte (2),
une poignée prévue sur la porte (2),
un revêtement intérieur (3) faisant face au volume intérieur ,
un module de caméra (4) fixé sur le revêtement intérieur (3), le module de caméra (4) comprenant :
un boîtier de caméra (5) destiné à recevoir une caméra (6),
un support de caméra (7) sur une surface avant du module de caméra (4) sur lequel la caméra (6) est placée et par lequel la caméra (6) est enfermée à l'intérieur du boîtier de caméra (5) et dans lequel le support de caméra (7) a une ouverture par laquelle le volume intérieur de l'appareil de refroidissement est visible au moyen de la caméra (6),
**caractérisé par**
un cadre (8) fixé sur le support de l'appareil photo (7),
un curseur (9) placé de manière coulissante dans le cadre (8) entre une première orientation pendant laquelle le curseur (9) bloque la vue de la caméra (6) en fermant l'ouverture et une seconde orientation pendant laquelle la caméra (6) est configurée pour voir le volume intérieur de l'appareil de réfrigération,
le boîtier de la caméra (5) comprend un moyen d'agitation électrique configuré pour faire glisser le curseur (9) entre la première et la seconde orientation lors de l'activation, et
un système de capteurs configuré pour mesurer, lors de l'ouverture de la porte, l'angle d'ouverture entre la porte (2) et le corps (1) dans l'orientation ouverte et configuré pour activer les moyens d'agitation électrique afin de faire glisser le curseur (9) vers la première orientation uniquement lorsque l'angle mesuré dépasse un angle prédéterminé.

2. Un appareil de refroidissement selon la déclaration 1, **caractérisé en ce que** le cadre (8) comprend au moins une encoche (10) immobilisant le curseur (9) dans la première ou la seconde orientation.

3. Un appareil de refroidissement selon la déclaration 1 ou 2, **caractérisé par** un moyen d'activation (11) prévu sur une surface extérieure du corps (1), de la porte (2) ou de la poignée, qui, lorsqu'il est activé, est configuré pour activer le moyen d'agitation électrique afin de faire glisser le curseur (9) entre la première et la deuxième orientation.

4. Un appareil de refroidissement selon l'une quelconque des déclarations précédentes, **caractérisé en ce que** le moyen d'agitation électrique est configuré pour être activé au moyen d'une interface utilisateur graphique.

5. Un appareil de refroidissement selon toute déclaration précédente, **caractérisé en ce que** le moyen d'agitation électrique est un moteur électrique.
